# EUROPEAN PATENT SPECIFICATION

(11) **EP 2 799 375 B1**
(45) Date of publication and mention of the grant of the patent: **07.09.2016**
(21) Application number: 14166509.1
(22) Date of filing: 30.04.2014
(51) Int. Cl.: B65G 53/14, B65G 53/24, B65G 53/66

(54) **Pneumatic transportation system, particularly for fragile objects**
Pneumatisches Transportsystem, insbesondere für zerbrechliche Gegenstände
Système de transport pneumatique, notamment pour objets fragiles

(30) Priority: 02.05.2013 IT RM20130260
(43) Date of publication of application: 05.11.2014
(73) Proprietor: Novatec S.r.l., 67100 Monteluco di Roio (AQ) (IT)
(72) Inventor: Beomonte Zobel, Pierluigi, I-67100 Monteluco di Roio (AQ) (IT); Gabrio Antonelli, Michele, I-67100 Monteluco di Roio (AQ) (IT); Auriti, Luca, I-67100 Monteluco di Roio (AQ) (IT); Colabianchi, Luca, I-67100 Monteluco di Roio (AQ) (IT); Durante, Francesco, I-67100 Monteluco di Roio (AQ) (IT)
(74) Representative: Carangelo, Pierluigi

(56) References cited:
- EP-A1- 1 369 365
- EP-A1- 2 003 075
- WO-A1-2011/077237
- BE-A- 553 744
- DE-U1-202004 010 505
- GB-A- 1 455 686
- GB-A- 2 292 132
- NL-A- 8 702 349
- US-A- 4 607 987

## Description

The present disclosure refers to the technical field of automation and industrial production and in particular it concerns a pneumatic transportation system, particularly for fragile objects.

In the technical field of industrial automation it is known to use the flow of a vector gas, under pressure or in depression, to move and transport objects from one place to another.

A first example of pneumatic transportation system of the state of the art is for example described in European patent EP 2019804. Another example of a pneumatic transportation system belonging to the prior art is described in patent US 4,275,976. GB 1 455 686 discloses a pneumatic transportation system according to the preamble of claim 1.

In the transportation systems described in the aforementioned patents the movement of the objects takes place inside transportation ducts thanks to a forced flow of vector gas, for example air, produced by a venturi effect nozzle.

The state of the art includes venturi tube devices comprising a body equipped with an inlet section of a gas flow, with an outlet section of the gas flow and with a control gate. The outlet section of the gas flow is for example in fluid communication with a transportation duct. Through the control gate the venturi effect nozzle is supplied with a flow of gas having a pressure, known as supply pressure. Such a supply pressure is such as to influence the pressure of the gas flow both upstream and downstream of the outlet gate, i.e. in the transportation duct, so that by varying the supply pressure it is possible to control, i.e. adjust/set, the pressure of the gas flow downstream of the outlet gate, i.e. in the transportation duct. The pressure of the gas flow in the transportation duct influences the speed, or in general the characteristics of motion, of the objects to be transported inside the transportation duct.

If the aforementioned pressure is low, there can be a clogging inside the transportation duct, and vice-versa if the pressure is high, in the case in which the objects to be transported are fragile, there is the risk of destroying the objects or even only partially harming their integrity.

There is a need to make an improved transportation system that makes it possible to transport objects in which it is possible to have effective control of the speed of the objects inside the transportation duct. Such a system would be particularly advantageous in the case in which fragile objects need to be transported, like for example pharmaceutical tablets or capsules, where for the purposes of the present description by pharmaceutical we mean both tablets or capsules containing active ingredients with therapeutic effect and tablets or capsules containing dietary supplements.

One object of the present description is to provide a pneumatic transportation system that allows the aforementioned requirements to be satisfied.

Such object is accomplished through a pneumatic transportation system as defined in general in claim 1. Preferred and advantageous embodiments of the aforementioned pneumatic transportation system are defined in the attached dependent claims.

The invention will become clearer from the following detailed description of a particular embodiment given as an example and, therefore, in no way limiting, in reference to the attached drawings, in which:
- figure 1 shows a perspective view of a pneumatic transportation system comprising a venturi effect nozzle; and
- figure 2 shows a plan side section view of the venturi effect nozzle of figure 1.

In the figures, elements that are the same or similar will be indicated with the same reference numerals.

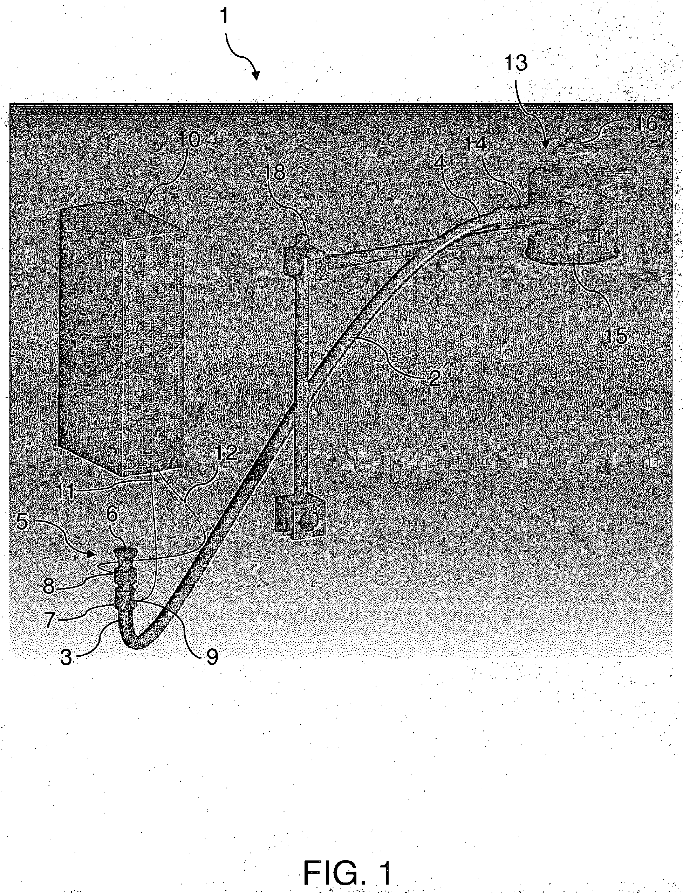

Figure 1 schematically shows a non-limiting embodiment of a pneumatic transportation system 1.

In the particular example shown, without for this reason introducing any limitation, the pneumatic transportation system 1 is intended to transport fragile objects, of relatively small size. For example, the pneumatic transportation system is a transportation system of pharmaceutical tablets or capsules. In a possible alternative embodiment the aforementioned pneumatic transportation system is intended to transport edible objects, like for example pralines or biscuits, and it is therefore a device that can be used in food production.

Henceforth for the sake of simplicity, and without introducing any limitation, we will refer to the case in which the pneumatic transportation system 1 is intended for the transportation of pharmaceutical tablets, for example being part of a production system that is provided, upstream of such a pneumatic transportation system, with a tablet production system comprising in sequence: a tablet machine, and preferably a dust remover and a metal detector.

The pneumatic transportation system 1 comprises a first transportation duct 2, having a first end portion 3 and a second opposite end portion 4, adapted to be passed through by a vector gas for transporting objects inside the duct itself 2. The vector gas is preferably air. In accordance with an embodiment, the first transportation duct 2 is a flexible pipe, for example made from PVC or PTFE with coiled reinforcing core, for example made from steel. For example, the first transportation duct 2 is a pipe with an internal diameter comprised in the range 20-50 mm including extremes and preferably roughly equal to 30 mm. The objects to be transported preferably have a main dimension that is smaller than the internal diameter of the first transportation duct 2, for example equal to about 1/5 or 1/2 of the internal diameter of the first transportation duct 2. The first transportation duct for example has a length comprised in the range 1-6 metres, including extremes, for example equal to about 3 metres.

The pneumatic transportation system 1 comprises a venturi effect nozzle 5 comprising a nozzle body 25 having an inlet section 6 with an inlet duct 26 and an outlet section 7 with an outlet duct 27. The nozzle body 25 is for example a compact block formed from one or more assembled pieces and it is for example made entirely or mainly from a metallic material, for example steel.

The outlet duct 27 is connected to the first end portion 3 of the first transportation duct 2. The venturi effect nozzle 5 comprises a control gate 8 to supply the venturi effect nozzle 5 with a flow of supply gas having a supply pressure adapted to influence the pressure of the flow of the vector gas inside the first transportation duct 2 for controlling the characteristics of the motion of the objects to be transported inside the first transportation duct 2.

In accordance with an embodiment, the pneumatic transportation system also comprises a second transportation duct (not shown in the figures) having a first end portion connected to the inlet duct 26 of the venturi effect nozzle 5 and a second opposite end portion that is a free end portion suitable for receiving the objects to be transported in input. In such an embodiment the venturi effect nozzle 5 is therefore arranged between the first transportation duct 2 and the second transportation duct. In accordance with an embodiment, the second transportation duct has a length comprised in the range 30cm - 200 cm, including extremes.

In accordance with an embodiment, the venturi effect nozzle 5 and the first transportation duct 2 are made as two distinct pieces and are connected together to form a sealed joint between the outlet section 7 and the first end portion 3 of the first transportation duct 2. Similarly, if a second transportation duct is also provided, the venturi effect nozzle 5 and the second transportation duct are made as two distinct pieces and are connected together to form a sealed joint between the inlet section 6 and the end portion of the second transportation duct connected to it.

The pneumatic transportation system 1 comprises a control system 10, 11, 12 operatively connected to the control gate 8 of the venturi effect nozzle 5 to control the supply pressure. The control system 10, 11, 12 comprises for example a control board 10 and a processing unit, for example a controller, contained inside the control board 10. The control board 10 preferably comprises a display. For example, said display is of the touchscreen type. The control board 10 comprises one or more input devices, for example represented by the same touchscreen display if foreseen, or comprising for example, in addition or as an alternative, a keypad or input buttons. The control system 10, 11, 12 preferably comprises a supply pipe 12 having an end portion sealably connected to the supply gate 8 of the venturi effect nozzle 5. The opposite end portion of the supply pipe 12 is preferably connected to a pressure adjustment valve provided in the control system 10,11,12 and controlled by the processing unit.

The venturi effect nozzle 5 comprises a first measurement gate 9, integrated in the nozzle body 25 in fluid communication with the outlet duct 27 and arranged in the outlet section 7.

The control system 10, 11, 12 is operatively connected to the measurement gate 9 to measure and control the pressure of the flow of the vector gas in the outlet duct 27 of the venturi effect nozzle 5 in order to control the supply pressure, i.e. in order to set said supply pressure. The control system 10, 11, 12 preferably comprises a connection pipe 11 having an end portion connected to the measurement gate 9 of the venturi effect nozzle 5. The opposite end portion of the connection pipe 11 is preferably connected to a measurement device of the pressure provided in the control system 10,11,12 adapted to acquire pressure measurements and to supply them to the processing unit for controlling the supply pressure.

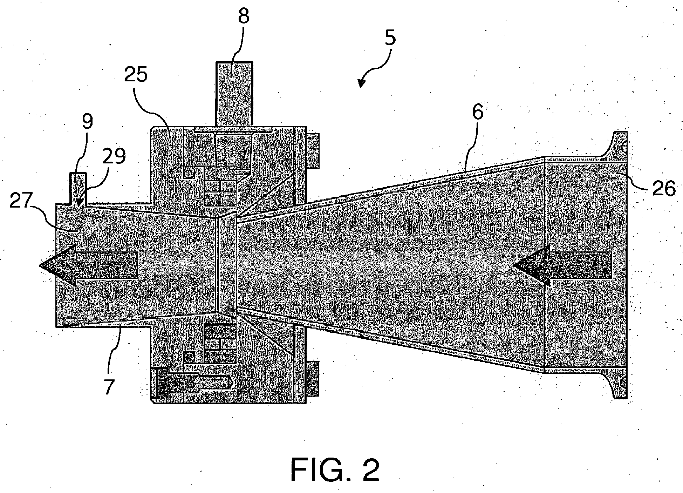

In accordance with an embodiment, the nozzle body 25 comprises a tubular wall that defines the outlet duct 27 and the measurement gate 9 comprises at least one through opening 29 defined in the tubular wall and that faces into the outlet duct 27. Preferably, as shown in figure 2, said tubular wall is a flared wall and said at least one through opening 29 is defined in the flared tubular wall. More preferably, as shown in figure 2, said flared tubular wall has a frustoconical surface.

Preferably, without for this reason introducing any limitation, the through opening 29 has an opening axis perpendicular to the axis of the outlet duct 27.

In accordance with an embodiment, the pneumatic transportation system 1 comprises an insertion or threaded joint type sealed connection system between the aforementioned tubular wall and the first end portion 3 of the first transportation duct 2.

In accordance with the invention, the pneumatic transportation system 1 comprises a second measurement gate (not shown in the figures) operatively connected to the control system 10, 11, 12 and arranged at or close to the second end portion 4 of the first transportation duct 2, or downstream thereof in the direction of the gas flow, provided for acquiing a second pressure measurement of the flow of vector gas. In such an embodiment, the control system 10, 11, 12 is such as to control the supply pressure based on the difference between the pressure of the flow of vector gas measured by the measurement gate 9 of the outlet duct 27 of the venturi effect nozzle 5 and the aforementioned second acquired pressure measurement.

with reference to figure 1, in accordance with an embodiment the pneumatic transportation system 1 comprises a discharge cyclone 13 connected to the second end portion 4 of the first transportation duct 2. Preferably, the pneumatic transportation system 1 comprises an anchoring system 18 suitable for supporting the discharge cyclone so that it is positioned at a desired height with respect to a collection container of the objects.

Preferably, the discharge cyclone 13 comprises an inlet gate 14 sealably connected to the second end portion 4 of the transportation duct 2, an outlet gate 15 and a discharge duct with curved path. The discharge duct with curved path, which may also not be present, extends between the aforementioned inlet gate 14 and the aforementioned outlet gate 15 of the discharge cyclone 13 and is suitable for absorbing at least part of the kinetic energy of the objects in transit in the discharge duct with curved path. Preferably, the discharge cyclone 13 comprises a dust suction gate 16 in fluid communication with the duct with curved path and a dust sucker operatively connected to the dust suction gate 16. In accordance with an embodiment, the outlet gate 15 of the discharge cyclone 13 is intended to be connected to a collection container intended to collect the objects transported and the pneumatic transportation system 1 comprises a compensation gate arranged between the suction gate 16 and the dust sucker, the compensation gate representing a gas intake or vent and being intended to control the pressure of the collection container, to avoid said container increasing its pressure dangerously with the risk of possible breakage, or reducing volume by deforming and limiting the collection of further transported objects. For example, such a compensation gate has an automatic flow lamination valve connected to it.

In an alternative embodiment instead of the collection container it is possible to foresee a hopper for loading the objects into a further machine or system, for example a machine or system for packaging the objects.

In accordance with a further embodiment, the discharge cyclone 13 can be equipped with a further inlet gate 14, so that it can receive objects coming from many transportation ducts 2 and associated venturi effect nozzles 5 of the type described above.

From the description made above it is possible to understand how a pneumatic transportation system of the type described above fully achieves the preset purposes. Experimental tests in the field have demonstrated that a pneumatic transportation system of the type described makes it possible to effectively transport the objects, and in particular experiments have been performed relating to the transportation of fragile objects, for example pharmaceutical tablets. Thanks to the provision of a pressure measurement gate 9 integrated directly in the venturi effect nozzle 5, it is indeed possible to precisely control, i.e. set, the supply pressure and therefore control the speed of the objects inside the first transportation duct 2. Moreover, the aforementioned integrated measurement gate can be advantageously used to detect possible clogging of objects in the pneumatic transportation system, for example if it is detected that the pressure measured is above a predetermined threshold. In this way it is possible to automatically intervene to stop the pneumatic transportation system, interrupting the supply of pressurised gas to the supply gate 8. Moreover, thanks to the provision of the aforementioned measurement gate 9 integrated in the venturi effect nozzle 5 it is possible to accurately characterise the motion of the objects inside the first transportation duct 2 and set operating parameters in the control system 10, for each type of object to be transported (for example for each type of tablet), which allow correct transportation of the objects. For example, such parameter can be stored in the control system and a user can select on each occasion the type of object to be transported, in this way obtaining substantial flexibility of use.

## Claims

1. Pneumatic transportation system (1) for objects, particularly for fragile objects, comprising:
- a first transportation duct (2), having a first end portion (3) and a second opposite end portion (4), adapted to be passed through by a vector gas for transporting objects inside the duct (2);
- a venturi effect nozzle (5) comprising a nozzle body (25) having an inlet section (6) with an inlet duct (26) and an outlet section (7) with an outlet duct (27), the outlet duct (27) being connected to the first end portion (3) of the first transportation duct (2), the venturi effect nozzle (5) comprising a control gate (8) for feeding the venturi effect nozzle (5) with a flow of supply gas having a supply pressure such as to influence the pressure of the flow of vector gas to control the characteristics of the motion of the objects to be transported inside the first transportation duct (2);
- a control system (10, 11, 12) operatively connected to the control gate (8) of the venturi effect nozzle (5) to control the supply pressure and therefore the pressure of the flow of vector gas;
wherein:
- the venturi effect nozzle (5) comprises a first measurement gate (9), integrated in the nozzle body (25), in fluid communication with the outlet duct ; and
- the control system (10, 11, 12) is operatively connected to the measurement gate (9) to measure the pressure of the flow of vector gas in the outlet duct (27) of the venturi effect nozzle (5) in order to control the supply pressure;
**characterized in that**:
- the first measurement gate (9) is arranged in said outlet section (7);
- the pneumatic transportation system (1) comprises a second measurement gate connected to the control system (10, 11, 12) and arranged at or close to the second end portion (4) of the first transportation duct (2), or downstream of it in the direction of the gas flow, provided to acquire a second pressure measurement of the flow of the vector gas, and wherein the control system (10, 11, 12) is such as to control the supply pressure based on the difference between the pressure of the flow of vector gas measured in said outlet duct (27) and said second pressure measurement acquired.

2. Pneumatic transportation system (1) according to claim 1, wherein the nozzle body (25) comprises a tubular wall that defines the outlet duct (27) and wherein the measurement gate (9) comprises one or more through openings (29) defined in the tubular wall.

3. Pneumatic transportation system (1) according to claim 2, wherein the through opening (29) has an opening axis perpendicular to the axis of the outlet duct (27).

4. Pneumatic transportation system (1) according to claims 2 or 3, comprising an insertion or threaded sealed connection system between said tubular wall and said first end portion (3).

5. Pneumatic transportation system (1) according to any one of the previous claims, wherein the venturi effect nozzle (5) and the first transportation duct (2) are made as two distinct pieces and are connected together to form a sealed joint between said outlet section (7) and said first end portion (3).

6. Pneumatic transportation system (1) according to any one of the previous claims, comprising a discharge cyclone (13) connected to said second end portion (4) of the first transportation duct (2).

7. Pneumatic transportation system (1) according to claim 6, wherein the discharge cyclone (13) comprises an inlet gate (14) sealably connected to said second end portion (4), an outlet gate (15) and a discharge duct with curved path, which extends between said inlet gate (14) and said outlet gate (15) of the discharge cyclone (13) and that is suitable for absorbing at least part of the kinetic energy of the objects in transit in said discharge duct with curved path.

8. Pneumatic transportation system (1) according to claim 7, wherein the discharge cyclone (13) comprises a dust suction gate (16) in fluid communication with the discharge duct with curved path.

9. Pneumatic transportation system (1) according to claim 8, wherein the outlet gate (15) of the discharge cyclone (13) is intended to be connected to a collection container of said objects and wherein the pneumatic transportation system (1) comprises a compensation gate arranged between the suction gate (16) and the dust sucker, the compensation gate representing an gas intake or vent and being intended to control the pressure of said collection container.

10. Pneumatic transportation system (1) according to any one of the previous claims, also comprising a second transportation pipe having a first end portion connected to the inlet duct (26) of the venturi effect nozzle (5) and a second opposite end portion that is a free end portion suitable for receiving the objects to be transported in inlet.

11. Pneumatic transportation system (1) according to claim 2, wherein said tubular wall is a flared wall and said at least one through opening (29) is defined in the flared tubular wall.

12. Pneumatic transportation system (1) according to claim 11, wherein said flared tubular wall has a frustoconical surface.

## Patentansprüche

1. Pneumatisches Transportsystem (1) für Objekte, insbesondere zerbrechliche Objekte, das folgende Merkmale aufweist:
- einen ersten Transportkanal (2) mit einem ersten Endabschnitt (3) und einem zweiten, gegenüberliegenden Endabschnitt (4), der so angepasst ist, dass ihn ein Vektorgas durchläuft, zum Transportieren von Objekten innerhalb des Kanals (2);
- eine Venturi-Effekt-Düse (5), die einen Düsenkörper (25) mit einem Einlassteil (6) mit einem Einlasskanal (26) und einem Auslassteil (7) mit einem Auslasskanal (27) aufweist, wobei der Auslasskanal (27) mit dem ersten Endabschnitt (3) des ersten Transportkanals (2) verbunden ist, wobei die Venturi-Effekt-Düse (5) ein Steuertor (8) zum Versorgen der Venturi-Effekt-Düse (5) mit einem Fluss eines Zuführgases mit einem Zuführdruck aufweist, um so den Druck des Flusses von Vektorgas zu beeinflussen, um die Charakteristika der Bewegung der innerhalb des ersten Transportkanals (2) zu transportierenden Objekte zu steuern;
- ein Steuersystem (10, 11, 12), das wirksam mit dem Steuertor (8) der Venturi-Effekt-Düse (5) verbunden ist, um den Zuführdruck und deshalb den Druck des Flusses von Vektorgas zu steuern;
wobei:
- die Venturi-Effekt-Düse (5) ein erstes Messtor (9), das in den Düsenkörper (25) integriert ist, in Fluidkommunikation mit dem Auslasskanal aufweist; und
- das Steuersystem (10, 11, 12) wirksam mit dem Messtor (9) verbunden ist, um den Druck des Flusses von Vektorgas in dem Auslasskanal (27) der Venturi-Effekt-Düse (5) zu messen, um den Zuführdruck zu steuern;
**dadurch gekennzeichnet, dass**:
- das erste Messtor (9) in dem Auslassteil (7) angeordnet ist;
- das pneumatische Transportsystem (1) ein zweites Messtor aufweist, das mit dem Steuersystem (10, 11, 12) verbunden und an oder nahe bei dem zweiten Endabschnitt (4) des ersten Transportkanals (2) angeordnet ist, oder flussabwärts hiervon in der Richtung des Gasflusses, das vorgesehen ist, um eine zweite Druckmessung des Flusses des Vektorgases zu erfassen, und wobei das Steuersystem (10, 11, 12) derart ist, dass es den Zuführdruck auf der Basis der Differenz zwischen dem Druck des Flusses von Vektorgas, der in dem Auslasskanal (27) gemessen wird, und der erfassten zweiten Druckmessung steuert.

2. Pneumatisches Transportsystem (1) gemäß Anspruch 1, bei dem der Düsenkörper (25) eine Röhrenwand aufweist, die den Auslasskanal (27) definiert, und bei dem das Messtor (9) eine oder mehrere Durchgangsöffnungen (29) aufweist, die in der Röhrenwand definiert sind.

3. Pneumatisches Transportsystem (1) gemäß Anspruch 2, bei dem die Durchgangsöffnung (29) eine Öffnungsachse senkrecht zu der Achse des Auslasskanals (27) aufweist.

4. Pneumatisches Transportsystem (1) gemäß Anspruch 2 oder 3, das einen Einschub oder ein mit einem Gewinde versehenes abgedichtetes Verbindungssystem zwischen der Röhrenwand und dem ersten Endabschnitt (3) aufweist.

5. Pneumatisches Transportsystem (1) gemäß einem der vorherigen Ansprüche, bei dem die Venturi-Effekt-Düse (5) und der erste Transportkanal (2) aus zwei unterschiedlichen Stücken hergestellt sind und miteinander verbunden sind, um ein abgedichtetes Verbindungsstück zwischen dem Auslassteil (7) und dem ersten Endabschnitt (3) zu bilden.

6. Pneumatisches Transportsystem (1) gemäß einem der vorherigen Ansprüche, das einen Abscheidezyklon (13) aufweist, der mit dem zweiten Endabschnitt (4) des ersten Transportkanals (2) verbunden ist.

7. Pneumatisches Transportsystem (1) gemäß Anspruch 6, bei dem der Abscheidezyklon (13) ein Einlasstor (14), das abdichtbar mit dem zweiten Endabschnitt (4) verbunden ist, ein Auslasstor (15) und einen Abscheidekanal mit gekrümmtem Weg aufweist, der sich zwischen dem Einlasstor (14) und dem Auslasstor (15) des Abscheidezyklons (13) erstreckt, und der geeignet ist zum Absorbieren zumindest eines Teils der kinetischen Energie der Objekte, die in dem Abscheidekanal mit gekrümmtem Weg durchlaufen.

8. Pneumatisches Transportsystem (1) gemäß Anspruch 7, bei dem der Abscheidezyklon (13) ein Staubsaugtor (16) in Fluidkommunikation mit dem Abscheidekanal mit gekrümmtem Weg aufweist.

9. Pneumatisches Transportsystem (1) gemäß Anspruch 8, bei dem das Auslasstor (15) des Abscheidezyklons (13) mit einem Sammelbehälter der Objekte verbunden sein soll, und wobei das pneumatische Transportsystem (1) ein Ausgleichstor aufweist, das zwischen dem Saugtor (16) und dem Staubsauger angeordnet ist, wobei das Ausgleichstor einen Gaseingang oder einen Ablass darstellt und den Druck des Sammelbehälters steuern soll.

10. Pneumatisches Transportsystem (1) gemäß einem der vorherigen Ansprüche, das außerdem ein zweites Transportrohr mit einem ersten Endabschnitt, der mit dem Einlasskanal (26) der Venturi-Effekt-Düse (5) verbunden ist, und einem zweiten, gegenüberliegenden Endabschnitt, der ein freier Endabschnitt ist, der geeignet zum Aufnehmen der zu transportierenden Objekte in dem Einlass ist, aufweist.

11. Pneumatisches Transportsystem (1) gemäß Anspruch 2, bei dem die Röhrenwand eine ausgestellte Wand ist und die zumindest eine Durchgangsöffnung (29) in der ausgestellten Röhrenwand definiert ist.

12. Pneumatisches Transportsystem (1) gemäß Anspruch 11, bei dem die ausgestellte Röhrenwand eine kegelstumpfförmige Oberfläche aufweist.

## Revendications

1. Système de transport pneumatique (1) pour des objets, en particulier pour des objets fragiles, comprenant :
- un premier conduit de transport (2) présentant une première partie d'extrémité (3) et une seconde partie d'extrémité (4) à l'opposée, adapté pour être traversé par un gaz vecteur pour le transport d'objets dans le conduit (2) ;
- une buse à effet Venturi (5) comprenant un corps de buse (25) présentant une section d'entrée (6) avec un conduit d'entrée (26) et une section de sortie (7) avec un conduit de sortie (27), le conduit de sortie (27) étant relié à la première partie d'extrémité (3) du premier conduit de transport (2), la buse à effet Venturi (5) comprenant une porte de commande (8) pour alimenter la buse à effet Venturi (5) en un flux de gaz d'amenée présentant une pression d'amenée de sorte à influencer la pression du flux du gaz vecteur pour commander les caractéristiques du mouvement des objets à transporter dans le premier conduit de transport (2) ;
- un système de commande (10, 11, 12) relié en fonctionnement à la porte de commande (8) de la buse à effet Venturi (5) pour commander la pression d'amenée et par conséquent la pression du flux de gaz vecteur ;
dans lequel :
- la buse à effet Venturi (5) comprend une première porte de mesure (9), intégrée dans le corps de buse (25), en communication fluidique avec le conduit de sortie ; et
- le système de commande (10, 11, 12) est relié en fonctionnement à la porte de mesure (9) pour mesurer la pression du flux de gaz vecteur dans le conduit de sortie (27) de la buse à effet Venturi (5) afin de commander la pression d'amenée ;
**caractérisé en ce que** :
- la première porte de mesure (9) est agencée dans ladite section de sortie (7) ;
- le système de transport pneumatique (1) comprend une seconde porte de mesure reliée au système de commande (10, 11, 12) et agencée sur ou près de la seconde partie d'extrémité (4) du premier conduit de transport (2), ou en aval de celle-ci dans la direction du flux de gaz, prévue pour acquérir une seconde mesure de pression du flux du gaz de vecteur, et dans lequel le système de commande (10, 11, 12) est de sorte à commander la pression d'amenée sur la base de la différence entre la pression du flux de gaz de vecteur mesurée dans ledit conduit de sortie (27) et ladite seconde mesure de pression acquise.

2. Système de transport pneumatique (1) selon la revendication 1, dans lequel le corps de buse (25) comprend une paroi tubulaire qui définit le conduit de sortie (27) et dans lequel la porte de mesure (9) comprend une ou plusieurs ouvertures traversantes (29) définies dans la paroi tubulaire.

3. Système de transport pneumatique (1) selon la revendication 2, dans lequel l'ouverture traversante (29) a un axe d'ouverture perpendiculaire à l'axe du conduit de sortie (27).

4. Système de transport pneumatique (1) selon la revendication 2 ou 3, comprenant un système d'insertion ou un système de connexion scellé fileté entre ladite paroi tubulaire et ladite première partie d'extrémité (3).

5. Système de transport pneumatique (1) selon l'une quelconque des revendications précédentes, dans lequel la buse à effet Venturi (5) et le premier conduit de transport (2) sont réalisés comme deux pièces distinctes et sont reliés ensemble pour former un joint scellé entre ladite section de sortie (7) et ladite première partie d'extrémité (3).

6. Système de transport pneumatique (1) selon l'une quelconque des revendications précédentes, comprenant un cyclone d'évacuation (13) relié à ladite seconde partie d'extrémité (4) du premier conduit de transport (2).

7. Système de transport pneumatique (1) selon la revendication 6, dans lequel le cyclone d'évacuation (13) comprend une porte d'entrée (14) reliée de manière étanche à ladite seconde partie d'extrémité (4), une porte de sortie (15) et un conduit d'évacuation avec une voie courbée, qui s'étend entre ladite porte d'entrée (14) et ladite porte de sortie (15) du cyclone d'évacuation (13) et qui est adapté pour absorber au moins une partie de l'énergie cinétique des objets en transit dans ledit conduit d'évacuation avec une voie courbée.

8. Système de transport pneumatique (1) selon la revendication 7, dans lequel le cyclone d'évacuation (13) comprend une porte d'aspiration de poussières (16) en communication fluidique avec le conduit d'évacuation avec une voie courbée.

9. Système de transport pneumatique (1) selon la revendication 8, dans lequel la porte de sortie (15) du cyclone d'évacuation (13) est destinée à être reliée à un contenant de collecte desdits objets et dans lequel le système de transport pneumatique (1) comprend une porte de compensation agencée entre la porte d'aspiration (16) et l'aspirateur de poussières, la porte de compensation représentant une admission ou un évent de gaz et étant destinée à commander la pression dudit contenant de collecte.

10. Système de transport pneumatique (1) selon l'une quelconque des revendications précédentes, comprenant aussi un second tuyau de transport présentant une première partie d'extrémité reliée au conduit d'entrée (26) de la buse à effet Venturi (5) et une seconde partie d'extrémité en regard qui est une partie d'extrémité libre adaptée pour recevoir les objets à transporter dans l'entrée.

11. Système de transport pneumatique (1) selon la revendication 2, dans lequel ladite paroi tubulaire est une paroi évasée et ladite au moins une ouverture traversante (29) est définie dans la paroi tubulaire évasée.

12. Système de transport pneumatique (1) selon la revendication 11, dans lequel ladite paroi tubulaire évasée a une surface tronconique.
